# EUROPEAN PATENT APPLICATION

(11) **EP 4 664 428 A1**
(43) Date of publication of application: **17.12.2025**
(21) Application number: 25176831.3
(22) Date of filing: 15.05.2025
(51) Int. Cl.: G06V 40/13, G06F 3/041

(54) **ELECTRONIC DEVICE**

(30) Priority: 14.06.2024 CN 202410767764
(71) Applicant: InnoLux Corporation, Chu-Nan 350, Miao-Li County (TW)
(72) Inventor: LIAO, Chien-Chih, 350 Chu-Nan, Miao-Li County (TW); CHANG, Kuei-Sheng, 350 Chu-Nan, Miao-Li County (TW); WU, Kuo-Jung, 350 Chu-Nan, Miao-Li County (TW); YAO, I-An, 350 Chu-Nan, Miao-Li County (TW)
(74) Representative: 2K Patentanwälte Blasberg Kewitz & Reichel

(57) **Abstract**

An electronic device includes a substrate, pixels, a second sensing unit, a first driving unit and a second driving unit. Each pixel includes a display unit including a self-luminous element and a first sensing unit. The second sensing unit overlaps at least one of the pixels. In a first mode, the first driving unit outputs a first signal to the display unit. In a second mode, the first driving unit outputs a second signal to the second sensing unit, receives a third signal from the second sensing unit, and outputs a fourth signal to the second driving unit according to the third signal. In a third mode, the second driving unit outputs a fifth signal to the first sensing unit according to the fourth signal, and the first sensing unit transmits a sixth signal to the first driving unit.

## Description

### CROSS-REFERENCE TO RELATED APPLICATIONS

This application claims the benefits of the Chinese Patent Application Serial Number 202410767764.7, filed on June 14, 2024, the subject matter of which is incorporated herein by reference.

### BACKGROUND

### Field of the Disclosure

The present disclosure relates to an electronic device and, more particularly, to an electronic device having a display function and a sensing function.

### Description of Related Art

Nowadays, electronic devices (such as mobile devices or wearable devices) have increasing demands for displays to be integrated with various sensors, among which fingerprint sensing has gradually become a necessary function. The fingerprint recognition function of most self-luminous electronic devices is achieved by bonding an external module to the edge of the electronic device. This method not only requires an outsourced fingerprint sensor for the bonding process, but also increases production costs and complexity, and the electronic devices also only have partial areas for fingerprint recognition, which is very inconvenient to use.

Therefore, there is a need to provide a novel electronic device to alleviate and/or obviate the above problems.

### SUMMARY

The present disclosure provides an electronic device, which comprises:
a substrate; a plurality of pixels disposed on the substrate; a second sensing unit disposed on the substrate and configured to overlap at least one of the plurality of pixels; a first driving unit disposed on the substrate; and a second driving unit disposed on the substrate. Each of the plurality of pixels includes: a display unit including a self-luminous element; and a first sensing unit. In a first mode, the first driving unit outputs a first signal to the display unit. In a second mode, the first driving unit outputs a second signal to the second sensing unit, receives a third signal from the second sensing unit, and outputs a fourth signal to the second driving unit according to the third signal. In a third mode, the second driving unit outputs a fifth signal to the first sensing unit according to the fourth signal, and the first sensing unit returns a sixth signal to the first driving unit.

Other novel features of the disclosure will become more apparent from the following detailed description when taken in conjunction with the accompanying drawings.

### BRIEF DESCRIPTION OF DRAWINGS

FIG. 1 is a schematic diagram of an electronic device according to an embodiment of the present disclosure;
FIG. 2 is a schematic diagram of the detailed structure of a pixel according to an embodiment of the present disclosure;
FIG. 3A is a circuit structure diagram of a self-luminous circuit according to an embodiment of the present disclosure;
FIG. 3B is a circuit structure diagram of a self-luminous circuit according to another embodiment of the present disclosure;
FIG. 4 is a circuit structure diagram of a sensing circuit according to an embodiment of the present disclosure;
FIG. 5 is a schematic diagram of a second sensing unit according to an embodiment of the present disclosure;
FIG. 6 is a schematic diagram of a detailed structure of the second driving unit according to an embodiment of the present disclosure;
FIG. 7 is an operation flow chart illustrating the first mode, the second mode and the third mode of the electronic device according to an embodiment of the present disclosure;
FIG. 8 is a schematic diagram of the operation of the first mode, the second mode and the third mode according to an embodiment of the present disclosure;
FIG. 9 is a schematic diagram of a detailed structure of a pixel according to another embodiment of the present disclosure;
FIG. 10 is a schematic diagram of a detailed structure of a pixel according to another embodiment of the present disclosure;
FIG. 11 is a schematic diagram of a detailed structure a pixel according to another embodiment of the present disclosure;
FIG. 12 is a schematic diagram of a detailed structure of a pixel according to another embodiment of the present disclosure;
FIG. 13 is a schematic diagram of a detailed structure of a pixel according to another embodiment of the present disclosure;
FIG. 14A is a schematic diagram of the first sensing unit and the CDS processing circuit according to an embodiment of the present disclosure; and
FIG. 14B is a schematic diagram of the operation of the sensing unit and the CDS processing circuit according to an embodiment of the present disclosure.

### DETAILED DESCRIPTION OF EMBODIMENT

Reference will now be made in detail to exemplary embodiments of the present disclosure, examples of which are illustrated in the accompanying drawings. Wherever possible, the same reference numerals are used in the drawings and description to refer to the same or like parts.

Throughout the specification and the appended claims, certain terms may be used to refer to specific components. Those skilled in the art will understand that electronic device manufacturers may refer to the same components by different names. The present disclosure does not intend to distinguish between components that have the same function but have different names. In the following description and claims, words such as "containing" and "comprising" are open-ended words, and should be interpreted as meaning "including but not limited to".

The terms, such as "about", "substantially", or "approximately", are generally interpreted as within 10% of a given value or range, or as within 5%, 3%, 2%, 1%, or 0.5% of a given value or range.

In the specification and claims, unless otherwise specified, ordinal numbers, such as "first" and "second", used herein are intended to distinguish elements rather than disclose explicitly or implicitly that names of the elements bear the wording of the ordinal numbers. The ordinal numbers do not imply what order an element and another element are in terms of space, time or steps of a manufacturing method. Thus, what is referred to as a "first element" in the specification may be referred to as a "second element" in the claims.

In the present disclosure, the expressions "the given range is from the first numerical value to the second numerical value" and "the given range falls within the range from the first numerical value to the second numerical value" indicate that the given range includes the first numerical value, the second value, and other values between the first and second numerical values.

Directional terms mentioned in the specification, such as "up", "down", "front", "rear", "left", "right", etc., only refer to the directions of the drawings. Accordingly, the directional term used is illustrative, not limiting, of the present disclosure. In the drawings, various figures illustrate the general characteristics of methods, structures and/or materials used in particular embodiments. However, these drawings should not be construed to define or limit the scope or nature encompassed by these embodiments. For example, the relative sizes, thicknesses and positions of various layers, regions and/or structures may be reduced or enlarged for clarity. One structure (or layer, component, substrate) described in the present disclosure is disposed on/above another structure (or layer, component, substrate), which can mean that the two structures are adjacent and directly connected, or can refer to two structures that are adjacent rather than directly connected.

In addition, the electronic device disclosed in the present disclosure is an electronic device having a fingerprint recognition function, wherein the electronic device may include a vehicle device, an imaging device, an assembly device, a backlight device, an antenna device, a tiled device, a touch electronic device, a curved electronic devices or a free shape electronic device, but not limited thereto. The display device may be a non-self-luminous display device or a self-luminous display device. The antenna device may be a liquid crystal type antenna device or a non-liquid crystal type antenna device, and the sensing device may be a sensing device that senses capacitance, light, heat energy or ultrasonic waves, but not limited thereto. The tiled device may include, for example, a display tiled device or an antenna tiled device, but not limited thereto. It is noted that the electronic device may be any combination of the above, but not limited thereto. In addition, the electronic device may be a bendable or flexible electronic device. It is noted that the electronic device may be any combination of the above, but not limited thereto. In addition, the shape of the electronic device may be a rectangular shape, a circular shape, a polygonal shape, a shape with curved edges, or other suitable shapes. The electronic device may have peripheral systems such as a driving system, a control system, a light source system, a shelf system, etc. to support the display device, antenna device or tiled device.

For convenience of explanation, in the following description, the electronic device is exemplified by a display device with a fingerprint recognition function. The display device may include, for example, liquid crystals, organic light emitting diodes (OLEDs), inorganic light emitting diodes (LEDs), micro-LEDs (uLEDs), sub-millimeter light emitting diodes (mini LEDs), quantum dots (QDs), quantum dot light emitting diodes (QLEDs, QDLEDs), fluorescence, phosphor, and other suitable display medium, or a combination thereof, but not limited thereto.

In addition, the fingerprint sensor of the present disclosure may sense fingerprints in various feasible ways. In some embodiments of the present disclosure, the fingerprint sensor may include a light sensor, such as a thin film transistor, PN type diode, PIN type diode or other suitable photoelectric conversion elements, for detecting the intensity of reflected light reflected by the finger, so that the control circuit, processor or chip responsible for fingerprint recognition may obtain the positions of the feature points of the fingerprint through the fingerprint sensor so as to perform fingerprint recognition.

It should be understood that, without departing from the spirit of the present disclosure, in the following embodiments, the features in different embodiments may be replaced, reorganized or mixed to accomplish other embodiments. The features among various embodiments may be mixed and matched arbitrarily as long as they do not violate the spirit of the invention or conflict with each other.

Unless otherwise defined, all terms (including technical and scientific terms) used here have the same meanings as commonly understood by those skilled in the art of the present disclosure. It is understandable that these terms, such as those defined in commonly used dictionaries, should be interpreted as having a meaning consistent with the relevant technology and the background or context of the present disclosure, rather than in an idealized or excessively formal interpretation, unless specifically defined.

In addition, the term "adjacent" used herein may refer to describe mutual proximity and does not necessarily mean mutual contact.

In addition, the description of "when..." or "while..." in the present disclosure means "now, before, or after", etc., and is not limited to occurrence at the same time. In the present disclosure, the similar description of "disposed on" or the like refers to the corresponding positional relationship between the two components, and does not limit whether there is contact between the two components, unless specifically limited. Furthermore, when the present disclosure recites multiple effects, if the word "or" is used between the effects, it means that the effects can exist independently, but it does not exclude that multiple effects can exist at the same time.

In the present disclosure, the voltage change of the electrical signal of the fingerprint may be obtained by using an oscilloscope to measure the signal readout lines. The reset signal and the selection signal may be obtained by using the oscilloscope to measure the test pads of the gate driver. The above oscilloscopes may be replaced by other suitable instruments.

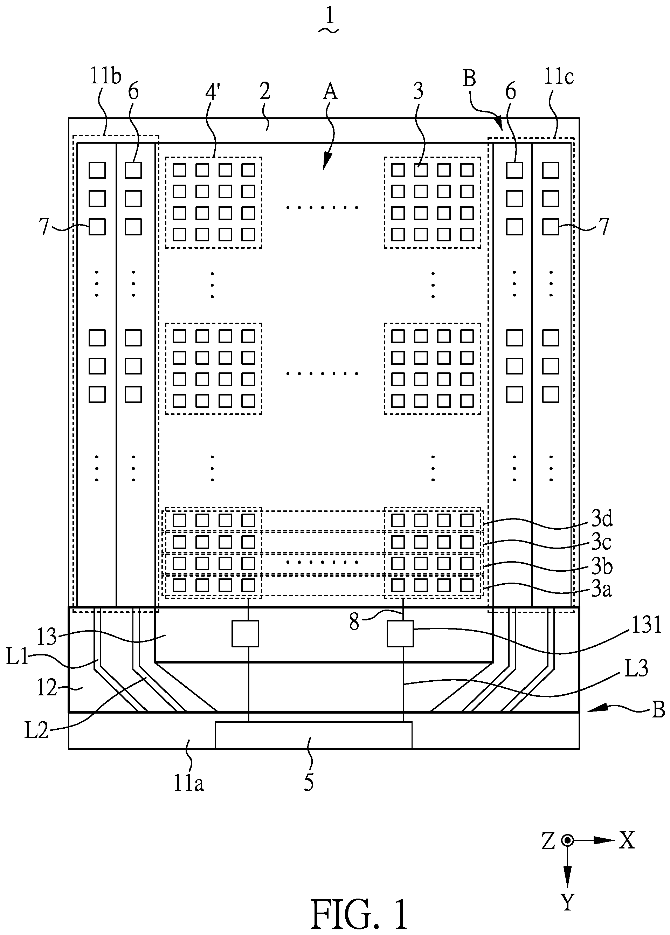

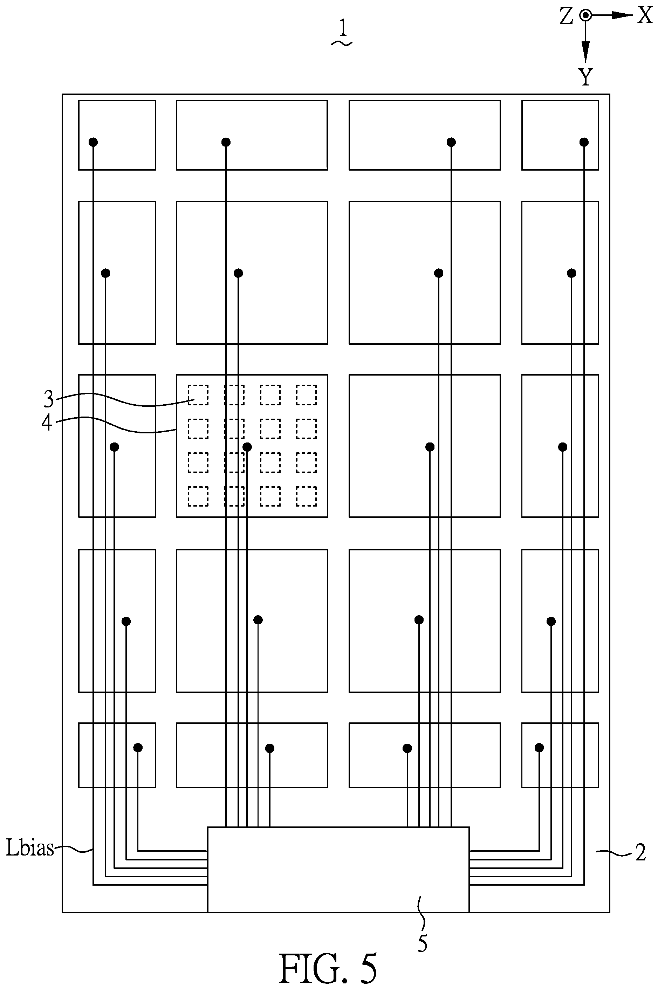

FIG. 1 is a schematic diagram of an electronic device 1 according to an embodiment of the present disclosure, which is presented in a top view. As shown in FIG. 1, the electronic device 1 may include an active area A and a non-active area B, wherein the non-active area B may surround the active area A. The electronic device 1 may include a substrate 2, a plurality of pixels 3, at least one second sensing unit 4 (for example, a plurality of second sensing units 4 as shown in FIG. 5), a first driving unit 5, at least one second driving unit 6 and at least one third driving unit 7. The pixels 3 may be disposed on the substrate 2 and may be located in the active area A. For example, the pixels 3 may be arranged in the active area A in an array. The second sensing unit 4 may be disposed on the substrate 2 and located in the active area A and, in the Z direction (for example, the normal direction of the electronic device), each second sensing unit 4 may overlap at least one pixel 3. In one embodiment, the electronic device 1 may include a plurality of second driving units 6 and/or a plurality of third driving units 7. The first driving unit 5, the plurality of second driving units 6 and/or the plurality of third driving units 7 may be disposed on the substrate 2 and may be located in the non-active area B, while it is not limited thereto.

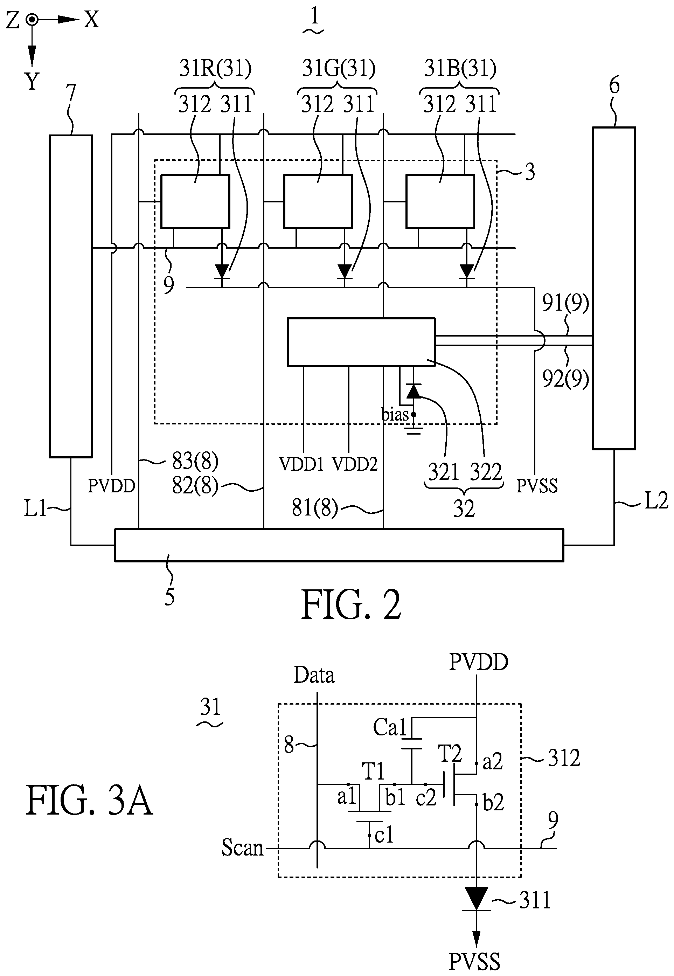

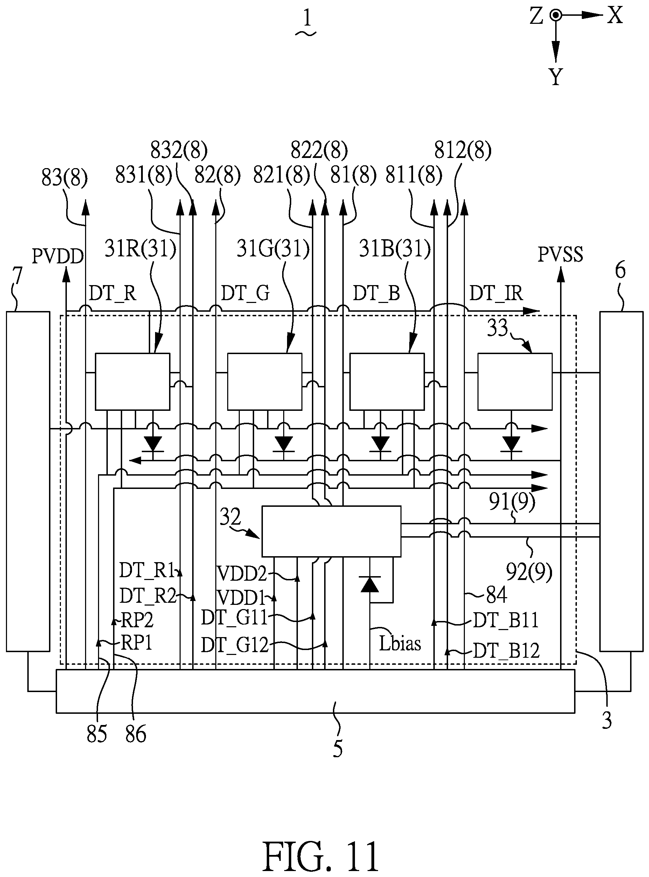

In addition, in one embodiment, the electronic device 1 may also include a first bonding area 11a, a first circuit area 12 and a second circuit area 13, which are disposed on the substrate 1. In one embodiment, the first bonding area 11a, the first circuit area 12 and the second circuit area 13 may be located in the non-active area B, wherein the second circuit area 13 may be disposed between the first circuit area 12 and the active area A, the first circuit area 12 may be disposed between the first bonding areas 11a and the active area A, while it is not limited thereto. In one embodiment, at least one de-multiplexer 131 may be disposed in the second circuit area 13. The first driving unit 5 may be disposed in the first bonding area 11, and the first driving unit 5 may be electrically connected to the second driving unit 6 and the third driving unit 7. The components in the first bonding area 11a (for example, the first driving unit 5) may be electrically connected to the de-multiplexer 131 in the second circuit area 13 via at least one conductive wire provided in the first circuit area 12. In one embodiment, the first circuit area 12 may include a plurality of conductive wires, and the plurality of conductive wires may form a fan-out structure, but it is not limited thereto. In one embodiment, the de-multiplexer 131 may be electrically connected to the components in the active area A (for example, pixels 3), but it is not limited thereto. In one embodiment, a conductive wire L1 is electrically connected to the first driving unit 5 and one of the plurality of third driving units 7, respectively, and a conductive wire L2 is electrically connected to the first driving unit 5 and one of the plurality of second driving units 6, respectively (please refer to FIG. 2). In addition, in one embodiment, the plurality of conductive wires L3 are electrically connected to the first driving unit 5 and the plurality of de-multiplexers 131, respectively, and the de-multiplexers 131 may be electrically connected to the display unit 31B and the first sensing unit 32 via the signal lines 8 (please refer to FIG. 11 and FIG. 2).

In one embodiment, the electronic device 1 further includes a second bonding area 11b and a third bonding area 11c, which are disposed on the substrate 1, wherein the first bonding area 11b and the second bonding area 11c may be located in the non-active area B, while it is not limited thereto. In one embodiment, the first bonding area 11b and the second bonding area 11c may be disposed opposite to each other on two sides of the electronic device 1, while it is not limited thereto. In one embodiment, the plurality of second driving units 6 are each disposed at different position in the non-active area B, for example, disposed in the second bonding area 11b and the third bonding area 11c opposite each other in the non-active area B, wherein part of the plurality of second driving units 6 may be respectively used to drive the first sensing units 32 (shown in FIG. 2) in the odd-numbered rows of pixels 3 (for example, the first row of pixels 3a, the third row of pixels 3b), and another part of the plurality of second driving units 6 may be used to drive the first sensing units 32 in the even-numbered rows of pixels 3 (for example, the second row of pixels 3b, the fourth row of pixels 3d), but it is not limited thereto. The second driving unit 6 may be, for example, a gate driver or an integrated circuit (IC), but it is not limited thereto. In one embodiment, the plurality of third driving units 7 are each disposed at different position in the non-active area B, for example, disposed in the second bonding area 11b or the third bonding area 11c, wherein part of the plurality of third driving units 7 may be used to drive the display unit 31 (shown in FIG. 2) in the odd-numbered rows of pixels 3 (for example, the first row of pixels 3a, the third row of pixels 3c), and another part of the plurality of third driving units 7 may be used to drive the display units 31 in the even-numbered rows of pixels 3 (for example, the second row of pixels 3b, the fourth row of pixels 3d), while it is not limited thereto. The plurality of third driving units 7 may be, for example, integrated circuits (ICs) or gate drivers, but it is not limited thereto. In one embodiment, the distance between one of the plurality of second driving units 6 and one of the plurality of display units may be smaller than the distance between one of the plurality of third driving units 7 and one of the plurality of display units, but it is not limited thereto.

The electronic device 1 of the present disclosure may have functions such as screen display, touch sensing, fingerprint sensing and/or biometrics recognition. In one embodiment, the first driving unit 5 of the present disclosure may have multiple functions, such as providing data signals required by the display unit 31, providing various signals (such as reference signals, clock signals or control signals, etc.) required by touch sensors or biometrics recognition devices (such as fingerprint sensors), providing control signals required for the gate driver, and performing biometrics recognition functions based on the signals returned by the touch sensors or fingerprint sensors, wherein the biometrics recognition nay include fingerprint recognition, face recognition, temperature recognition, heart rhythm recognition or other physiological signal recognition, while it is not limited thereto. For convenience of explanation, the biometrics recognition is exemplified by fingerprint recognition below. In one embodiment, the first driving unit 5 includes a first IC and a second IC. The first IC may be used to perform operations related to fingerprint sensing, fingerprint recognition and/or touch sensing, and the second IC may be used to perform operations related to the screen display screen and/or touch determination (such as determining whether there is a touch), or the second IC may also be used to perform operations related to fingerprint sensing and/or fingerprint recognition. In one embodiment, the first IC may be, for example, an IC that provides signals required for fingerprint sensing and/or touch sensing, or a processing IC for fingerprint recognition, such as a signal readout integrated circuit (ROIC), while it is not limited thereto. In one embodiment, the second IC may be, for example, a display IC, a touch with display driver IC (TDDI), or a fingerprint touch display driver IC (FTDDI), while it is not limited thereto. In one embodiment, the first IC and the second IC may be different ICs. In another embodiment, the first IC and the second IC may be integrated together, for example, the first IC is integrated into the second IC, while it is not limited thereto.

Next, the aforementioned components will be described.

FIG. 2 is a detailed structural diagram of the pixel 3 according to an embodiment of the present disclosure, and please refer to FIG. 1 and FIG. 2 at the same time. FIG. 2 is used to show the internal structure of a single pixel 3. As shown in FIG. 2, a single pixel 3 may include at least one display unit 31 and a first sensing unit 32. Each display unit 31 may include a self-luminous element 311 and a self-luminous circuit 312. The first sensing unit 32 may include a sensing element 321 and a sensing circuit 322. In addition, the electronic device 1 may also include a plurality of signal lines 8 and a plurality of scan lines 9, each of which is electrically connected to the pixel 3.

First, the display unit 31 will be described. In one embodiment, the self-luminous element 311 may be, for example, a light emitting diode, and the type of the light emitting diode may be as described hereinbefore, but it is not limited thereto. The self-luminous element 311 may be used to emit electromagnetic waves, which may be light, for example, but not limited thereto. In one embodiment, the self-luminous element 311 may be, for example, a micro light emitting diode (micro-LED, uLED), but it is not limited thereto. In one embodiment, the display unit 31 may be, for example, a sub-pixel. For example, in FIG. 2, the pixel 3 may include a plurality of display units 31, and the plurality of display units 31 may be, for example, the display units 31R, 31G and 31B. The self-luminous element 311 of the display unit 31R may be, for example, a red light emitting diode, the self-luminous element 311 of the display unit 31G may be, for example, a green light emitting diode, and the self-luminous element 311 of the display unit 31B may be, for example, a blue light emitting diode, while it is not limited thereto. For convenience of explanation, in the following examples, the display unit 31 is exemplified by including display units 31R, 31G and 31B. The self-luminous circuit 312 may be, for example, a control circuit of a light emitting diode.

In one embodiment, the self-luminous circuit 312 of each display unit 31 may be connected between one of the signal lines 8 and the self-luminous element 311, while it is not limited thereto. In one embodiment, each display unit 31 may be electrically connected to the first driving unit 5 through one of the signal lines 8. In one embodiment, the first driving unit 5 may have the function of a data driver, and the signal lines 8 may be used as data lines. For example, the self-luminous circuit 312 of the display unit 31B may be electrically connected to the first driving unit 5 through one signal line 81 of the signal lines 8 so as to receive the data signal required to display blue light through the signal line 81, the self-luminous circuit 312 of the display unit 31G may be electrically connected to the first driving unit 5 through one signal line 82 of the signal lines 8 so as to receive the data signal required to display green light through the signal line 82, and the self-luminous circuit 312 of the display unit 31R may be electrically connected to the first driving unit 5 through one signal line 83 of the signal lines 8 so as to receive the data signal required to display red light through the signal line 83, while it is not limited thereto.

In one embodiment, the self-luminous circuit 312 of each display unit 31 may be electrically connected to the third driving unit 7 through one of the scan lines 9, wherein the third driving unit 7 may be equipped with the function of a gate driver, so that the third driving unit 7 may be used to control and turn on or off the switches inside the display unit 31, while it is not limited thereto. In one embodiment, the display units 31R, 31G and 31B may share the same scan line 9, while it is not limited thereto. In one embodiment, the self-luminous element 311 may be electrically connected between the corresponding self-luminous circuit 312 and a low voltage PVSS. For example, the anode of the self-luminous element 311 (for example, light emitting diode) may be electrically connected to the self-luminous circuit 312, and the cathode of the self-luminous element 311 may be electrically connected to the low voltage PVSS. In addition, the self-luminous circuit 312 may be electrically connected to a high voltage PVDD.

Next, the details of the self-luminous circuit 312 will be described. FIG. 3A is a circuit structure diagram of the self-luminous circuit 312 according to an embodiment of the present disclosure, and please refer to FIG. 1, FIG. 2 and FIG. 3A at the same time. FIG. 3A is used to show details of the self-luminous element 311 and the self-luminous circuit 312 of a single display unit 31.

As shown in FIG. 3A, in one embodiment, the self-luminous circuit 312 may include a switch T1, a switch T2, and a capacitor Ca1. The switch T1 has a first end a1, a second end b1 and a control end c1. The switch T2 has a first end a2, a second end b2 and a control end c2. The first end a1 of the switch T1 is electrically connected to the signal lines 8 serving as the data lines to receive the data signal Data transmitted by the data lines. The second end b1 of the switch T1 is electrically connected to the capacitor Ca1 and the control end c2 of the switch T2. The control end c1 of the switch T1 is electrically connected to the scan line 9 to receive the scan signal Scan transmitted from the scan line 9. The first end a2 of the switch T2 may be electrically connected to the high voltage PVDD and the capacitor Ca1, and the second end b2 of the switch T2 may be electrically connected to the self-luminous element 311. In the self-luminous circuit 321, the switch T1 may be used to receive the data signal Data, the capacitor Ca1 may be used to process the data signal Data, and the switch T2 may be used to drive the self-luminous element 311, while it is not limited thereto. The switches T1 and T2 may be, for example, transistors, but not limited thereto.

In one embodiment, by appropriately controlling the switch T1 and the switch T2 to be turned on and off, the structure of FIG. 3A may have the function of pulse amplitude modulation (PAM), but it is not limited thereto.

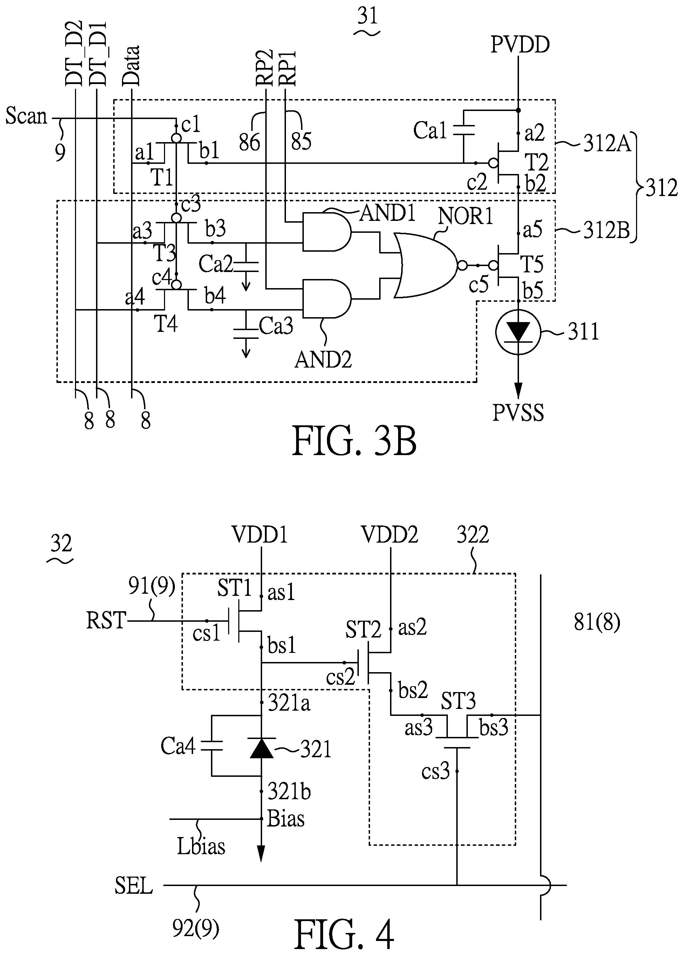

FIG. 3B is a circuit structure diagram of a self-luminous circuit 312 according to another embodiment of the present disclosure, and please refer to FIGS. 1 to 3A and FIG. 3B at the same time. FIG. 3B is used to show the details of the self-luminous element 311 and the self-luminous circuit 312 of a single display unit 31.

As shown in FIG. 3B, the self-luminous circuit 312 of the display unit 31 may include a pulse amplitude modulation circuit 312A and a pulse width modulation (PWM) circuit 312B. In one embodiment, the structure of the pulse amplitude modulation circuit 312A is similar to the self-luminous circuit 312 of FIG. 3A, except that the second end b2 of the switch T2 is electrically connected to self-luminous element 311 through a switch T5 of the pulse width modulation circuit 312B.

In one embodiment, the pulse width modulation circuit 312B may include, for example, three switches T3, T4 and T5, two capacitors Ca2~Ca3, two logic AND gates AND1~AND2, and a logic NOR gate NOR1. The switch T3 has a first end a3, a second end b3 and a control end c3. The switch T4 has a first end a4, a second end b4 and a control end c4. The switch T5 has a first end a5, a second end b4 and a control end c4. The switches T3, T4 and T5 may be transistors, for example.

In one embodiment, the first end a3 of the switch T3 may be electrically connected to the first driving unit 5 (shown in FIG. 2) through one of the signal lines 8 to receive a digital signal DT_D1 provided by the first driving unit 5, the second end b3 of the switch T3 may be electrically connected to the capacitor Ca2 and an input end of the logic AND gate AND1, and the control end c3 of the switch T3 may be electrically connected to the third driving unit 7 (shown in FIG. 2) through the scan line 9. The first end a4 of the switch T4 may be electrically connected to the first driving unit 5 (shown in FIG. 2 ) through another one of the signal lines 8 to receive a digital signal DT_D2 provided by the first driving unit 5, the second end b4 of the switch T4 may be electrically connected to the capacitor Ca3 and an input end of the logic AND gate AND2, and the control end c4 of the switch T4 may be electrically connected to the third driving unit 7 (shown in FIG. 2) through the scan line 9. The control ends c1, c3 and c4 of the switches T1, T3 and T4 may share the same scan line 9, while it is not limited thereto. In addition, the logic AND gate AND1 may have two input ends, wherein one of the input ends is electrically connected to the second end b3 of the switch T3, the other one of the input ends may be electrically connected to the first driving unit 5 through a signal line 85 (shown in 2) to receive a reference pulse signal RP1 provided by the first driving unit 5, and an output end of the logic AND gate AND1 is electrically connected to an input end of the logic NOR gate NOR1. The logic AND gate AND2 may have two input ends, wherein one of the input ends is electrically connected to the second end b4 of the switch T4, the other one of the input ends may be electrically connected to the first driving unit 5 through a signal line 86 (shown in FIG. 2) to receive a reference pulse signal RP2 provided by the first driving unit 5, and an output end of the logic AND gate AND2 is electrically connected to the other input end of the NOR gate NOR1. An output end of the logic NOR gate NOR1 may be electrically connected to the control end c5 of the switch T5. The first end a5 of the switch T5 may be electrically connected to the second end b2 of the switch T2, and the second end b5 of the switch T5 may be electrically connected to the self-luminous element 311.

In one embodiment, by appropriately controlling the switches T1~T5 to be turned on and off, the structure of FIG. 3B may have the function of pulse amplitude modulation and may have the function of pulse width modulation, but it is not limited thereto.

Accordingly, the details of the display unit 31 can be understood.

Next, the first sensing unit 32 will be described, and please refer to FIG. 2 again. In one embodiment, the first sensing unit 32 may have a fingerprint sensing function. The sensing element 321 may be used to receive electromagnetic waves, such as light, but it is not limited thereto. The sensing element 321 may be, for example, a fingerprint sensing element, which may sense fingerprints through any suitable method. In some embodiments, the type of the sensing element 321 may include a light sensor, such as a thin film transistor, a PN-type diode, PIN-type diode or other suitable photoelectric conversion elements, for detecting the intensity of the reflection light reflected by the finger, so that the fingerprint recognition circuit (for example, the first driving unit 5) may obtain the positions of the feature points of the fingerprint so as to perform fingerprint recognition, while it is not limited thereto. In one embodiment, the sensing circuit 322 may be, for example, a control circuit of the sensing element 321, while it is not limited thereto.

The first sensing unit 32 may be electrically connected to the second driving unit 6 through at least one scan line 9. In one embodiment, the second driving unit 6 may have the function of a gate driver, and the first sensing unit 32 may be electrically connected to the second driving unit 6 through two scan lines 91 and 92, while it is not limited thereto. Some internal components of the first sensing unit 32 may be electrically connected to a high voltage VDD1, and another part of the components of the first sensing unit 32 may be electrically connected to a high voltage VDD2, where the high voltage VDD2 may be the same as or different from the high voltage VDD1. In addition, in one embodiment, the first sensing unit 32 may be electrically connected to one of the signal lines 8. For example, in FIG. 2, the first sensing unit 32 may be electrically connected to a signal line 81, and the signal line 81 may also be electrically connected to one of the display units 31 (for example, the display unit 31B) and the first driving unit 5. In one embodiment, the second driving unit 6 may control and turn on or off the transistor in the sensing circuit 322, thereby causing the sensing element 321 to sense, and the signal line 81 may be used as a signal readout line for the sensing element 321 for transmitting a sensing signal sensed by the sensing element 321 back to the first driving unit 5, wherein the first driving unit 5 may have a fingerprint recognition function, which may obtain the sensing signal through the signal line 81, and perform fingerprint recognition through the sensing signal, while it is not limited thereto. It can be seen that, in the display phase, the signal line 81 may be used as a data line of the display unit (for example, 31B) and, in the fingerprint sensing phase, the signal line 81 may be used as a signal readout line of the sensing element 321. In one embodiment, since human eyes are less sensitive to blue light, the signal line 81 corresponding to the display unit 31B (blue light emitting diode) is used as a signal readout line for reducing the visual impact to the user caused when switching working state of the signal line 81, but it is not limited thereto. In one embodiment, the present disclosure may also use the signal line corresponding to the display unit 31G or 31R as the signal readout line.

Next, the details of the sensing circuit 322 of the first sensing unit 32 will be described. FIG. 4 is a circuit structure diagram of the sensing circuit 322 according to an embodiment of the present disclosure, and please refer to FIGS. 1 and 2 and FIG. 4 at the same time, in which FIG. 4 is used to show details of the sensing element 321 and the sensing circuit 322 of a single first sensing unit 32.

As shown in FIG. 4, the sensing circuit 322 of the first sensing unit 32 may include a first switch ST1, a second switch ST2 and a third switch ST3. The first switch ST1 has a first end as1, a second end bs1 and a control end cs1. The second switch ST2 has a first end as2, a second end bs2 and a control end cs2. The third switch ST3 has a first end as3, a second end bs3 and a control end cs3. The sensing element 321 may have a first end 321a and a second end 321b, and the sensing element 321 may be connected in parallel with a capacitor Ca4. The capacitor Ca4 may store fingerprint electrical signals, for example, but it is not limited thereto.

In one embodiment, the second end bs1 of the first switch ST1 may be electrically connected to the first end 321a of the sensing element 321, and the second end bs1 of the first switch ST1 and the first end 321a of the sensing element 321 may be electrically connected to the control end cs2 of the second switch ST2. The first end as1 of the first switch ST1 may be electrically connected to the high voltage VDD1, and the control end cs1 of the first switch ST1 may be electrically connected to the scan line 91, and electrically connected to the second driving unit 6 (shown in FIG. 2 ) through the scan line 91. The scan line 91 may be used to transmit a reset signal RST provided by the second driving unit 6 to the control end cs1 of the first switch ST1 thereby turning on the reset signal RST, wherein the first switch ST1 may be, for example, a reset transistor. In one embodiment, the second end bs2 of the second switch ST2 is electrically connected to the first end as3 of the third switch ST3, and the first end as2 of the second switch ST2 is electrically connected to the high voltage VDD2, wherein the second switch ST2 may be, for example, a transistor with a function of amplifying electrical signals. In one embodiment, the second end bs3 of the third switch ST3 may be electrically connected to the signal line 81, and the signal line 81 may be electrically connected to the first driving unit 5 (shown in FIG. 2). The control end cs3 of the third switch ST3 may be electrically connected to the scan line 92 and electrically connected to the second driving unit 6 (shown in FIG. 2) via the scan line 92. The scan line 92 may be used to transmit a selection signal SEL provided by the second driving unit 6 to the control end cs3 of the third switch ST3 thereby turning on the third switch ST3, wherein the third switch ST3 may be, for example, a data transmission transistor. In one embodiment, the second end 321b of the sensing element 321 may be electrically connected to a node Bias. The node Bias may be electrically connected to a common voltage signal line Lbias (shown in FIG. 4). The common voltage signal line Lbias may transmit a bias signal. The bias signal is applied to the second end 321b of the sensing element 321, wherein the bias signal may be a reference voltage for touch sensing or fingerprint sensing, but it is not limited thereto. By controlling and turning on or off the first switch ST1, the second switch ST2 and the third switch ST3, the sensing element 321 may perform biometrics recognition on the corresponding touch position and transmit biometrics recognition signals through the signal line 81 to the first driving unit 5. It can be seen that, in the display mode, the signal line 81 may be used to transmit data signals to the display unit 31 and, in the fingerprint sensing mode, the signal line 81 may be used to transmit biometrics recognition signals to the first driving unit 5.

In one embodiment, a complete fingerprint may, for example, consist of a plurality of sensing positions (for example, touch positions) corresponding to a plurality of pixels 3, wherein the sensing element 321 of each pixel 3 may correspond to one of the plurality of sensing positions (for example, touch positions) of the complete fingerprint. Therefore, after the first driving unit 5 obtains the sensing signals of the plurality of sensing elements 321, the first driving unit 5 may integrate the sensing signals to form a complete fingerprint sensing result so as to facilitate subsequent fingerprint recognition steps.

In one embodiment, the first sensing unit 32 may adopt an active pixel sensor (APS) architecture, while it is not limited thereto. In one embodiment, the first sensing unit 32 may be directly manufactured on the substrate 10 during the manufacturing process of the substrate 10. Alternatively, the first sensing unit 32 may also be an independent component that is disposed on the substrate 10 after the substrate 10 is manufactured. For example, the first sensing unit 32 is disposed on the substrate 10 in a bonding manner, but it is not limited thereto.

Accordingly, the details of the first sensing unit 32 can be understood.

Next, please refer to FIG. 1 and FIG. 5 at the same time, wherein FIG. 5 is a schematic diagram of a plurality of second sensing units 4 according to an embodiment of the present disclosure. As shown in FIG. 1 and FIG. 5, a plurality of second sensing units 4 may be disposed on the substrate 2, wherein, in the Z direction, the second sensing units 4 may be disposed on the pixel 3. Each second sensing unit 4 may overlap at least one of the plurality of pixels 3 in the Z direction. For example, in FIG. 1, one second sensing unit 4 may overlap a plurality of pixels 3 in the Z direction. In one embodiment, the second sensing unit 4 may be electrically connected to the first driving unit 5. In one embodiment, the second sensing unit 4 and the first sensing unit 32 may be electrically connected to the node Bias (shown in FIG. 2) on the sensing circuit 322 and the common voltage signal line Lbias (shown in FIG. 4), so as to receive the bias signal. In one embodiment, the first sensing unit 32 and the second sensing unit 4 may share the sensing circuit 322.

One second sensing unit 4 may represent one touch sensor. Therefore, in the normal direction of the electronic device, the range of a second sensing unit 4 overlaps a touch sensing area 4', and one second sensing unit 4 may overlap a plurality of pixels 3 or may be electrically connected to a plurality of first sensing units 32 (shown in FIG. 2). In other words, one touch sensing area 4' may overlap a plurality of pixels 3, or may overlap a plurality of first sensing units 32, while it is not limited thereto. In one embodiment, a plurality of second sensing units 4 may be connected together, but may also be separated. In one embodiment, the second sensing unit 4 may be used to implement the touch function of the electronic device 1. The second sensing unit 4 may be, for example, a touch sensing electrode, which may be composed of a transparent conductive layer such as ITO or IZO, while it is not limited thereto. In one embodiment, when the electronic device 1 needs to perform a touch function, the control element (for example, the first driving unit 5) may provide a touch sensing signal to the second sensing unit 4 through the common voltage signal line Lbias, so as to be used as a voltage signal during touch sensing, and the control element (for example, the first driving unit 5) may receive the signal returned by the second sensing unit 4 to determine whether there is a touch. For example, when an object (for example, a finger) presses a touch sensing area 4', the capacitance between the finger and the second sensing unit 4 of the touch sensing area 4' will change, thereby affecting the signal at node Bias received by the first driving unit 5 (which may be regarded as the touch sensing signal returned by the second sensing unit 4). Because the signal returned by the touch sensing area 4' will be different from the signals returned by the other areas that are not pressed, the first driving unit 5 may be aware of a touch occurring in the touch sensing area 4'. The above touch sensing method is only an example, and the disclosure is not limited thereto. In one embodiment, when the second sensing unit 4 performs touch sensing, the first switch ST1 and the third switch ST3 of the sensing circuit 322 are in an off state.

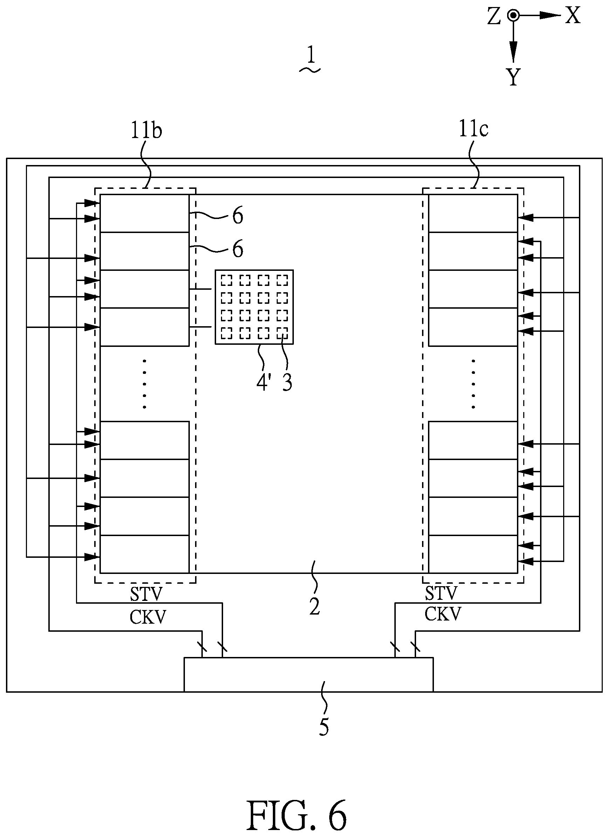

Through the configuration of the second sensing unit 4, the electronic device 1 may have a plurality of touch sensing areas 4', and each touch sensing area may overlap a plurality of pixels 3. Therefore, the fingerprint sensing of the electronic device 1 may be implemented to achieve zone-based sensing through the zoning design of the touch sensing area 4' (shown in FIG. 6). In one embodiment, the sensing of one fingerprint may be implemented through one or more first sensing units 32 (shown in FIG. 2) corresponding to one or more touch sensing areas 4', while it is not limited thereto.

In one embodiment, the touch sensing area 4' corresponds to a range of a second sensing unit 4 of FIG. 5, while it is not limited thereto. Furthermore, one touch sensing area 4' may include, for example, a second sensing unit 4, a pixel 3 overlapping the second sensing unit 4, a plurality of first sensing units 32 (shown in FIG. 2) electrically connected to the second sensing unit 4, and a portion of the substrate 2 overlapping the second sensing unit 4.

Next, please refer to FIGS. 1, 5 and 6 at the same time, wherein FIG. 6 is a schematic configuration diagram of the second driving unit 6 and the touch sensing area 4' according to an embodiment of the present disclosure. For convenience of explanation, FIG. 6 only shows a single touch sensing area 4' as an example, and the portion of the third driving unit 7 is omitted in FIG. 6. As shown in FIG. 6, the electronic device 1 may include a plurality of second driving units 6, and the second driving units 6 may be, for example, but not limited to, gate drivers. The electronic device 1 is provided with a plurality of touch sensing areas 4', wherein the plurality of first sensing units 32 in each touch sensing area 4' may correspond to one or more second driving units 6.

When a finger presses the electronic device 1, the electronic device 1 may first obtain the pressing position of the finger through the second sensing unit 4, and then perform fingerprint sensing on the touch sensing area 4' corresponding to the pressing position of the finger, so that there is no need to perform fingerprint sensing on all areas. In this case, only the second driving unit 6 corresponding to the first sensing unit 32 in the touch sensing area 4' needs to operate, so that the energy consumption of the electronic device 1 can be greatly reduced, while it is not limited thereto..

In one embodiment, the first driving unit 5 may transmit a startup signal STV and a clock signal CKV to the second driving unit 6. The second driving unit 6 controls the first sensing unit 32 corresponds to each touch sensing area 4' according to the startup signal STV and the clock signal CKV, while it is not limited thereto.

Accordingly, the second sensing unit 2 can be understood.

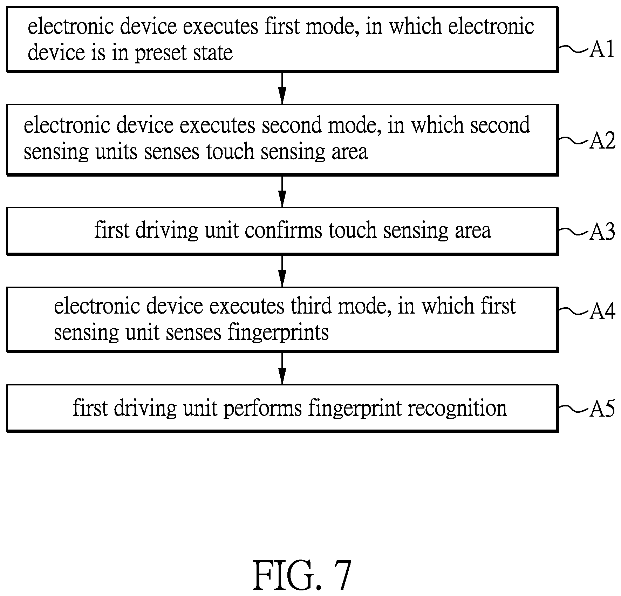

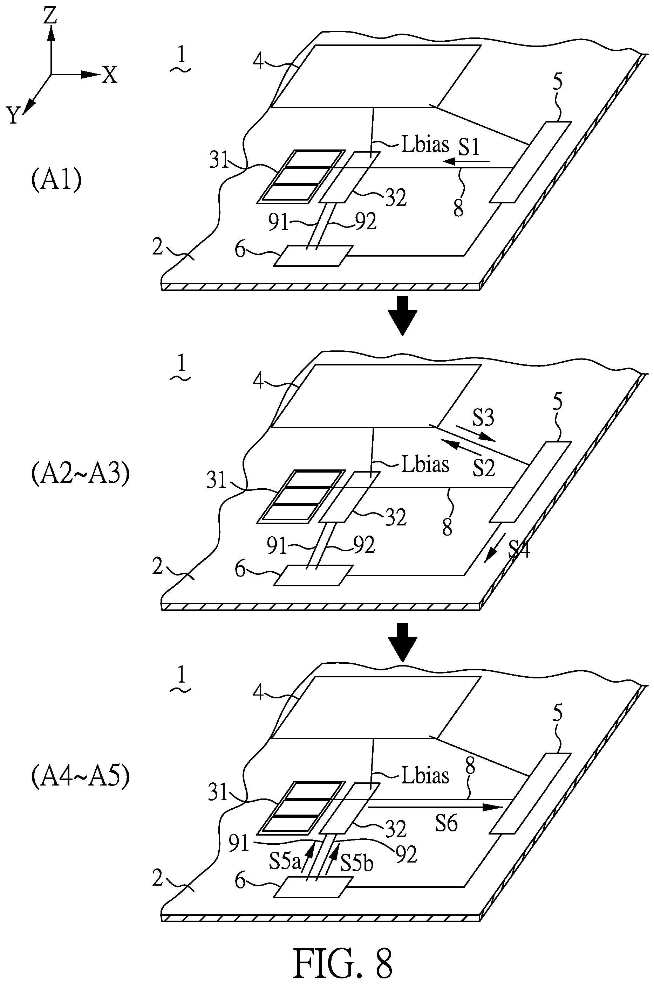

According to the foregoing paragraphs, it can be known that the electronic device 1 of the present disclosure may have a display function, a touch function and a fingerprint sensing function, and thus may be operated in a first mode (for example, performing a display function), a second mode (for example, performing a touch function) and a third mode (for example, performing a fingerprint sensing function). Next, the switching operation of the above modes will be explained. FIG. 7 is an operation flowchart of the first mode, the second mode and the third mode of the electronic device 1 according to an embodiment of the present disclosure. FIG. 8 is a schematic diagram of the operation of the electronic device 1 according to an embodiment of the present disclosure. FIG. 8 is used for illustrating the first mode (step A1), the second mode (steps A2~A3) and the third mode (steps A4~A5), and please refer to FIGS. 1 to 6 as assistance.

As shown in FIG. 7, when the electronic device 1 is in operation, step A1 is first executed, and the electronic device 1 executes the first mode, in which the electronic device 1 is in a preset state, and the preset state may be, for example, an unlocked state, and it may display the screen, but it is not limited thereto. Then, step A2 is executed, and the electronic device 1 executes the second mode, in which at least one of the plurality of second sensing units 4 senses a touch sensing area 4'. Then, step A3 is executed, and the first driving unit 5 confirms the touch sensing area 4'. Then, step A4 is executed, and the electronic device 1 executes the third mode, in which the first sensing unit 32 relative to the touch sensing area 4' senses fingerprints. Then, step A5 is executed, and the first driving unit 5 performs fingerprint recognition. Next, the details of each step will be explained.

As shown in FIG. 7 and FIG. 8, in one embodiment, when step A1 is executed (that is, when the first mode is executed), the electronic device 1 may execute the display mode. At this moment, the first driving unit 5 may output a first signal S1 to the display unit 31 through the signal lines 8 to drive the display unit 31 to emit light. For example, in the first mode, the first driving unit 5 may transmit a first signal S1 through the signal line 81 to the display unit 31B, and the display unit 31B may emit blue light, for example, but it is not limited thereto. In addition, the switch in the display unit 31 may be turned on or off under the control of the third driving unit 7 (not shown) so that the display unit 31 receives the first signal S1 thereby displaying the image. In one embodiment, the first signal S1 may be, for example, a data signal used to display an image, while it is not limited thereto.

As shown in FIG. 7 and FIG. 8, in one embodiment, when step A2 is executed (that is, when the first phase of the second mode is executed), the first driving unit 5 may output a second signal S2 to the second sensing unit 4, the second sensing unit 4 performs touch sensing according to the second signal S2, and the first driving unit 5 receives the third signal S3 from the second sensing unit 4. In one embodiment, the second signal S2 may be a voltage signal, and the second sensing unit 4 may perform touch sensing according to the voltage signal, while it is not limited thereto. In one embodiment, the third signal S3 may be, for example, a touch sensing signal returned by the second sensing unit 4 (for example, a voltage converted from the capacitance value between the finger and the second sensing unit 4), while it is not limited thereto. In addition, in one embodiment, when the second mode is executed, the first driving unit 5 may stop outputting the first signal, while it is not limited thereto.

Next, in one embodiment, when step A3 is executed (that is, when the second phase of the second mode is executed), the first driving unit 5 may output a fourth signal S4 to the second driving unit 6 according to the third signal S3. For example, the first driving unit 5 may be aware of the current touch sensing area 4' of the finger according to the third signal S3 and, when the first driving unit 5 recognizes that the first sensing unit 32 corresponding to the touch sensing area (shown in FIG. 6) needs to perform fingerprint sensing and fingerprint recognition, the first driving unit 5 may output the fourth signal S4 to at least one of the plurality of second driving units 6 so as to drive the first sensing unit 32 corresponding to the touch sensing area 4' in the plurality of second sensing units 4. In one embodiment, the fourth signal may include the start signal STV and the clock signal CKV, and the second driving unit 6 may control and turn on or off the switch in the first sensing unit 32 according to the start signal STV and the clock signal CKV, while it is not limited thereto. It should be noted that the first driving unit 5 may confirm whether the first sensing unit 32 corresponding to the touch sensing area 4' needs to perform fingerprint sensing and/or fingerprint recognition according to various applicable methods, for example, according to whether the finger touching time exceeds a threshold or not or whether the finger touching area exceeds a threshold or not, and so on, while it is not limited thereto.

As shown in FIG. 7 and FIG. 8, in one embodiment, when step A4 is executed (that is, when the third mode is executed), according to the fourth signal S4, the second driving unit 6 may output a fifth signal S5a (for example, reset signal RST) and another fifth signal S5b (for example, selection signal SEL) to the first sensing unit 32, and the first sensing unit 32 may return a sixth signal S6 to the first driving unit 5. In more detail, as shown in FIG. 6 and FIG. 8, in one embodiment, after the first driving unit 5 receives the third signal S3, at least one of the plurality of second driving units 6 may receive a start signal STV, and may transmit a fifth signal according to the clock signal CKV (for example, the fourth signal S4), wherein the fifth signal includes the reset signal RST (for example, the fifth signal S5a) transmitted to the first switch ST1 through the scan line 91 and the selection signal SEL (for example, the fifth signal S5b) transmitted to the second switch ST2 through the scan line 92, wherein the control method of the reset signal RST and the selection signal SEL is as described in the previous embodiment and thus a detailed description is deemed unnecessary. At this moment, the sensing element 321 may perform fingerprint sensing, and the second switch ST2 is turned on due to the first switch ST1 being turned on so as to amplify the signal sensed by the sensing element 321 to form a sensing signal (for example, the sixth signal S6), and the sensing signal is transmitted to the signal line 81 through the turn-on third switch ST3, and then transmitted back to the first driving unit 5, while it is not limited thereto. It can be seen that the fifth signals S5a and S5b may be the reset signal RST and the selection signal SEL, respectively. In one embodiment, the sixth signal S6 may be a sensing signal. It should be noted that FIG. 8 is only a schematic diagram for illustrative purpose, and the actual structure of the electronic device 1 is not limited thereto.

In one embodiment, when step A5 is executed, that is, when the first driving unit 5 receives the sixth signal S6, the first driving unit 5 may perform biometrics recognition, such as fingerprint recognition. In more detail, the first driving unit 5 may obtain a plurality of sixth signals S6 from a plurality of first sensing units 32 and integrate the plurality of sixth signals S6 to form a complete fingerprint data. Then, the first driving unit 5 may perform recognition on the complete fingerprint data. In one embodiment, the first driving unit 5 may have or may be connected to a memory (not shown). The memory may store at least one preset fingerprint data, so that the first driving unit 5 may compare the obtained complete fingerprint data with the preset fingerprint data to recognize whether the fingerprint is consistent with the preset fingerprint data, and then perform subsequent corresponding operations, such as giving at least some permissions of the electronic device 1 to the user, while it is not limited thereto.

Accordingly, the operation processes of the first mode, the second mode and the third mode can be understood.

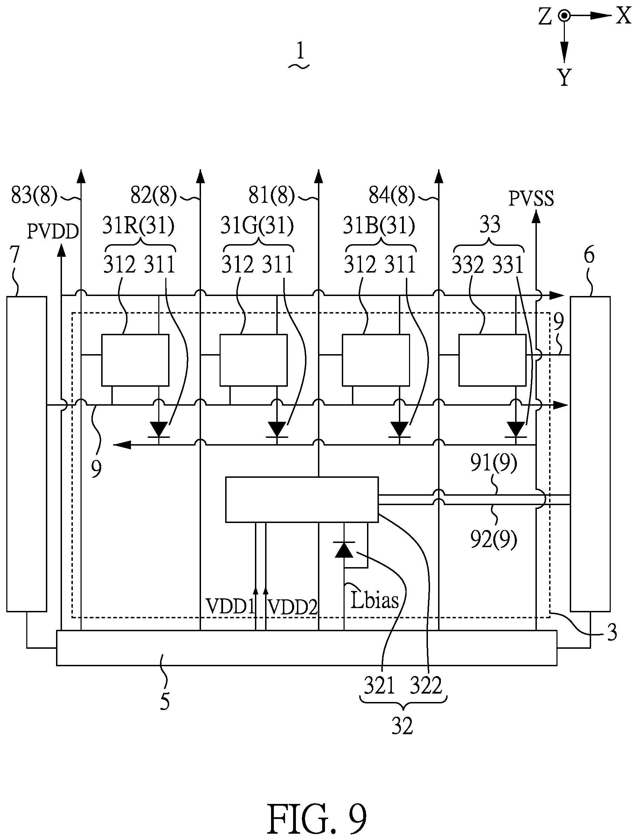

The electronic device 1 of the present disclosure may have different implementation aspects. FIG. 9 is a schematic diagram of a detailed structure of a pixel according to another embodiment of the present disclosure, and please refer to FIGS. 1 to 8 and FIG. 9 at the same time. The embodiment in FIG. 9 may generally be applicable to the description of the embodiment in FIG. 2 and FIG. 3A, and thus the following description mainly focuses on the differences.

As shown in FIG. 9, each pixel 3 further includes an infrared display unit 33. The infrared display unit 33 may include an infrared self-luminous element 331 and an infrared self-luminous circuit 332. In one embodiment, the infrared display unit 33 may be used to display light corresponding to a wavelength range of infrared. The wavelength range is, for example, between 760 nanometers and 1 millimeter (760nm ≦ wavelength range ≦ 1mm), while it is not limited thereto. In one embodiment, the infrared self-luminous element 331 may be, for example, an infrared light emitting diode, but it is not limited thereto. The infrared self-luminous circuit 332 may be, for example, a control circuit of an infrared light emitting diode.

In one embodiment, the signal lines 8 may include a signal line 84, and the infrared display unit 33 may be electrically connected to the first driving unit 5 through the signal line 84. In addition, the infrared display unit 33 may be electrically connected to the second driving unit 6 through one of the scan lines 9, or the infrared display unit 33 may also be electrically connected to the third driving unit 7 through one of the scan lines 9 (such a connection is not shown in figures). In one embodiment, one end of the infrared self-luminous element 331 may be electrically connected to its corresponding infrared self-luminous circuit 332, and the other end of the infrared self-luminous element 331 may be electrically connected to a low voltage PVSS, while it is not limited thereto. In addition, the infrared self-luminous circuit 332 may also be electrically connected to the high voltage PVDD, while it is not limited thereto. In one embodiment, when fingerprint sensing is required, the first driving unit 5 may transmit the start signal STV and/or the clock signal CKV to the second driving unit 6 (please refer to the embodiment of FIG. 6), and the second driving unit 6 may turn on or off, for example, the switch element (not shown) inside the infrared self-luminous circuit 332 according to the start signal STV and/or the clock signal CKV. Then, the first driving unit 5 may transmit the data signal required to display the infrared to the infrared display unit 33, so that the infrared display unit 33 may display infrared for allowing the first sensing unit 32 to perform fingerprint sensing, while it is not limited thereto.

In addition, in one embodiment, the sensing element 321 of the first sensing unit 32 may be used to sense infrared. In one embodiment, when fingerprint sensing is required, the first driving unit 5 and the third driving unit 7 may drive the infrared display unit 33 to display infrared and, when the infrared is irradiated to the finger, the finger may reflect the infrared to the sensing element 321 of the first sensing unit 32, whereby the first sensing unit 32 may provide a sensing signal, while it is not limited thereto. The operation method of the first sensing unit 32 may be applicable to the description of FIG. 4, and thus will not be described in detail.

In addition, in one embodiment, the self-luminous circuit 312 of the display unit 31 of FIG. 9 may be applied to the circuit structure of FIG. 3A, and thus may have the function of pulse amplitude modulation, while it is not limited thereto.

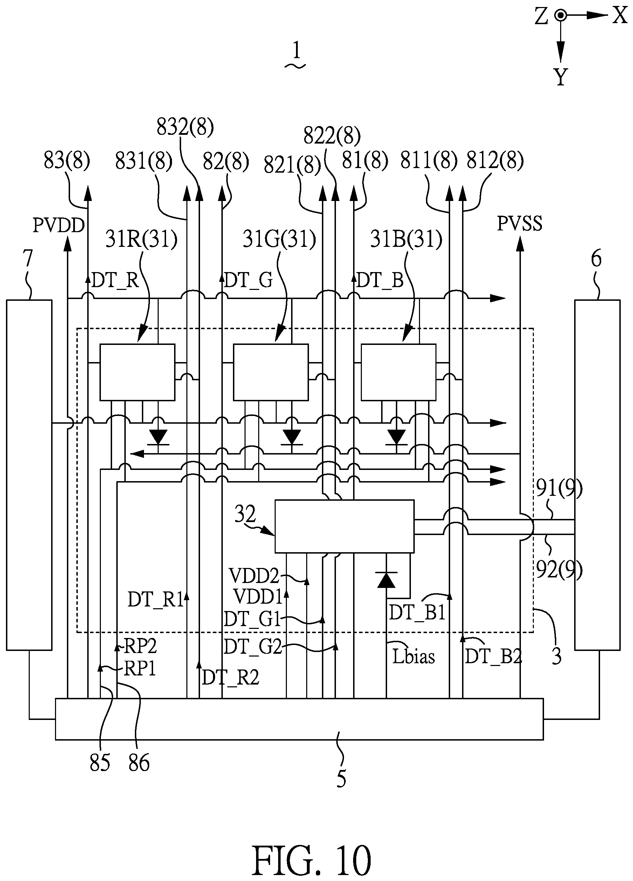

The electronic device 1 of the present disclosure may have different implementation aspects. FIG. 10 is a schematic diagram of a detailed structure of a pixel according to another embodiment of the present disclosure, and please refer to FIGS. 1 to 9 and FIG. 10 at the same time. The description of the embodiment of FIG. 10 may generally be applicable to the embodiment of FIG. 2 and FIG. 3B, and thus the following description mainly focuses on the differences.

As shown in FIG. 10, the display unit 31R may receive the data signal DT_R through the data line 83, the display unit 31G may receive the data signal DT_G through the data line 82, and the display unit 31B may receive the data signal DT_B through the data line 81. The data signals DT_R, DT_G and DT_B may correspond to the data signal Data in FIG. 3B. In addition, the signal lines 8 may also include a signal line 85 and a signal line 86. The display units 31R, 31G and 31B may receive the reference pulse signal RP1 output by the first driving unit 5 via the signal line 85, and the display units 31R, 31G and 31B may receive the reference pulse signal RP2 output by the first driving unit 5 via the signal line 86, wherein the reference pulse signals RP1 and RP2 are voltage signals with fixed waveform. In addition, the signal lines 8 may also include signal lines 811, 812, 821, 822, 831 and 832, wherein the display unit 31B may receive the digital signal DT_B1 output by the first driving unit 5 through the signal line 811, and receive the digital signal DT_B2 output by the first driving unit 5 through the signal line 812. The display unit 31G may receive the digital signal DT_G1 output by the first driving unit 5 via the signal line 821, and receive the digital signal DT_G2 output by the first driving unit 5 via the signal line 822. The display unit 31R may receive the digital signal DT_R1 output by the first driving unit 5 via the signal line 831, and receive the digital signal DT_R2 output by the first driving unit 5 via the signal line 832. The digital signals DT_B1, DT_G1 and DT_R1 may correspond to the signal DT_D1 in FIG. 3B, and the digital signals DT_B2, DT_G2 and DT_R2 may correspond to the signal DT_D2 in FIG. 3B. The reference pulse signals RP1 and RP2 and the digital signals DT_B1, DT_B2, DT_G1, DT_G2, DT_R1 and DT_R2 may be used to cause each of the self-luminous circuits 312 of the self-display units 31R, 31G and 31B to perform the PWM function, while it is not limited thereto.

It can be seen from this that the embodiment of FIG. 10 may be regarded as the form of FIG. 2 with the self-luminous circuit 312 of FIG. 3B. Therefore, the self-luminous circuit 312 in the embodiment of FIG. 10 may have the functions of pulse amplitude modulation and pulse width modulation. The operation mode of the light emitting circuit 312 may be applicable to the description in FIG. 4, and thus a detailed description is deemed unnecessary.

The electronic device 1 of the present disclosure may have different implementation aspects. FIG. 11 is a schematic diagram of a detailed structure of a pixel according to another embodiment of the present disclosure, and please refer to FIGS. 1 to 10 at the same time. The embodiment in Fig. 11 can generally be applied to the description of the embodiment in Fig. 9 and Fig. 10, so the following mainly focuses on the differences.

The embodiment of FIG. 11 may be regarded as an integration of the embodiments of FIG. 9 and FIG. 10. As shown in FIG. 11, the pixel 3 further includes an infrared display unit 33. The infrared display unit 33 may include an infrared self-luminous element 331 and an infrared self-luminous circuit 332, and the signal lines 8 include a signal line 84. The second driving unit 6 (or the third driving unit 7) may be used to control and turn on or off the switch in the infrared self-luminous circuit 332, and the first driving unit 5 may output a data signal for displaying infrared through the signal line 84 to the infrared display unit 33, so that the infrared self-luminous element 331 displays infrared. In addition, the sensing element 321 in FIG. 11 may be used to sense infrared. Besides, the architecture of the display unit 31 in FIG. 11 can be adapted to the architecture in FIG. 10.

Thus, the pixel 3 in the embodiment of FIG. 11 may have the function of PWM, or may have the functions of PAM and PWM at the same time (as shown in the embodiment of FIG. 10), and the fingerprint sensing may be implemented through infrared sensing method (as shown in the embodiment of FIG. 9).

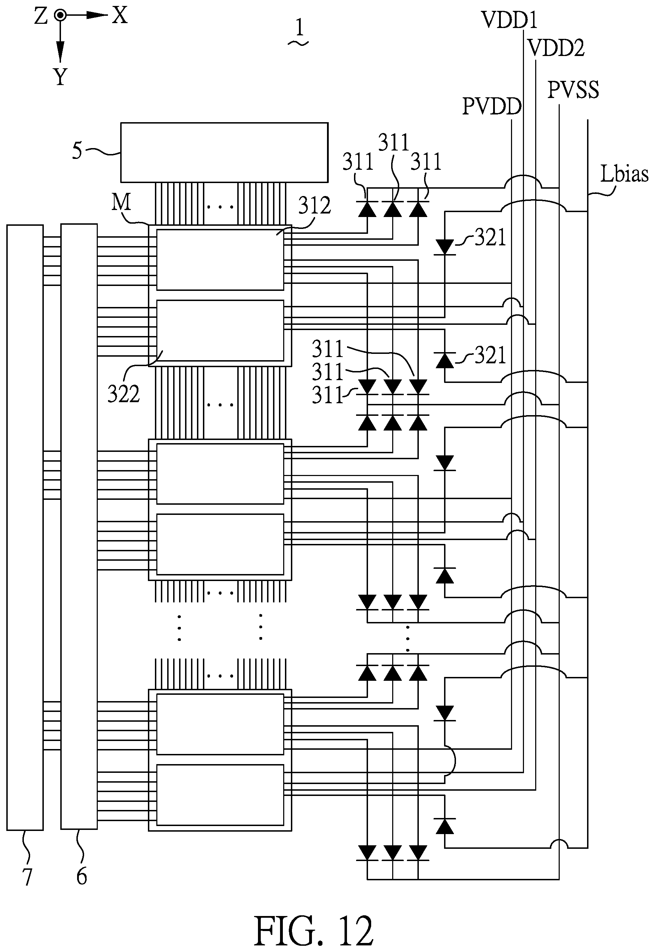

The electronic device 1 of the present disclosure may have different implementation aspects. FIG. 12 is a partial schematic diagram of the electronic device 1 according to another embodiment of the present disclosure, and please refer to FIGS. 1 to 11 and FIG. 12 at the same time. The embodiment in FIG. 12 may generally be applicable to the description of the embodiment in FIG. 1 and FIG. 2, and thus the following description mainly focuses on the differences.

In FIG. 12, the self-luminous circuit 312 and the sensing circuit 322 may adopt a microchip structure and may be manufactured using a silicon-based process. Therefore, the electronic device 1 of FIG. 12 may include a plurality of microchips M, and each microchip M may be provided with at least one self-luminous circuit 312 and at least one sensing circuit 322, while it is not limited thereto. In addition, a single self-luminous circuit 312 on each microchip M may be electrically connected to a plurality of self-luminous elements 311 at the same time for controlling the self-luminous elements 311. In addition, a single sensing circuit 322 on each microchip M may be electrically connected to a plurality of sensing elements 321 at the same time for controlling the sensing elements 321.

In addition, in one embodiment, one end of each self-luminous element 311 may be electrically connected to the self-luminous circuit 312, and the other end of each self-luminous element 311 may be electrically connected to a low voltage PVSS, while it is not limited thereto. One end of each sensing element 321 may be electrically connected to the sensing circuit 322, and the other end of each sensing element 321 may be electrically connected to the node Bias and the common voltage signal line Lbias (shown in FIG. 4). Each self-luminous circuit 312 may also be electrically connected to a high voltage PVDD. Each sensing circuit 322 may also be electrically connected to high voltages VDD1 and VDD2.

In one embodiment, the self-luminous element 311 and/or the sensing element 321 may be directly fabricated on the substrate 10 during the manufacturing process of the substrate 10, or the self-luminous element 311 and/or the sensing element 321 may also be disposed on the manufactured substrate 10 through, for example, bonding method, but it is not limited thereto. In addition, in this architecture, the second sensing unit 4 (shown in FIG. 5) and the sensing element 321 may still be electrically connected to the node Bias (shown in FIG. 2 ) and the common voltage signal line Lbias (shown in FIG. 4), so as to perform touch sensing in a self-capacitive manner, while it is not limited thereto.

In one embodiment, the microchip M may be disposed in the first bonding area 11b and/or the second bonding area 11c, while it is not limited thereto. In another embodiment, a portion of the plurality of microchips M may also be disposed in the active area AA, while it is not limited thereto. By integrating the self-luminous circuit 312 and the sensing circuit 322 into the microchip M, the space occupied by the active area AA may be reduced, thereby greatly improving the space utilization of the electronic device 1, while it is not limited thereto.

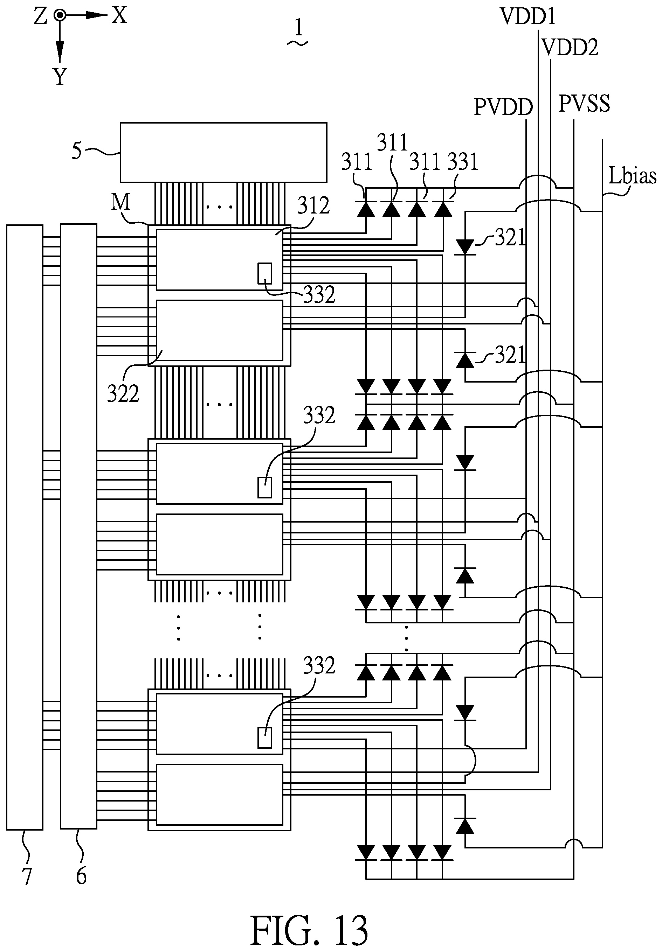

The electronic device 1 of the present disclosure may have different implementation aspects. FIG. 13 is a partial schematic diagram of the electronic device 1 according to another embodiment of the present disclosure, and please refer to FIGS. 1 to 12 and FIG. 13 at the same time. The embodiment in FIG. 13 may generally be applicable to the description of the embodiment in FIG. 9 and FIG. 12, and thus the following description mainly focuses on the differences.

The embodiment of FIG. 13 may be regarded as an integration of the embodiments of FIG. 9 and FIG. 12. As shown in FIG. 13, the electronic device 1 may further include a plurality of infrared self-luminous elements 331 and a plurality of infrared self-luminous circuits 332. In addition, the self-luminous circuit 312, the sensing circuit 322 and the infrared self-luminous circuit 332 may adopt a microchip architecture, in which the infrared self-luminous circuit 332 may be integrated into the self-luminous circuit 312 or may also be integrated into the sensing circuit 322 (which is not shown in figures), so that a single self-luminous circuit 312 on each microchip M may be electrically connected to a plurality of self-luminous elements 311 and a plurality of infrared self-luminous elements 331 at the same time (or a single sensing circuit 322 may be electrically connected to a plurality of sensing elements 321 and a plurality of infrared self-luminous elements 331 at the same time (which is not shown in figures). The details of the self-luminous circuit 312 and the sensing circuit 322 may be applicable to the description of the embodiment of FIG. 12.

In addition, one end of each infrared self-luminous element 331 may be electrically connected to the self-luminous circuit 312, and the other end of each infrared self-luminous element 331 may be electrically connected to a low voltage PVSS.

Accordingly, the space occupied by the active area AA may be reduced, or the space usage rate may be greatly improved, while it is not limited thereto.

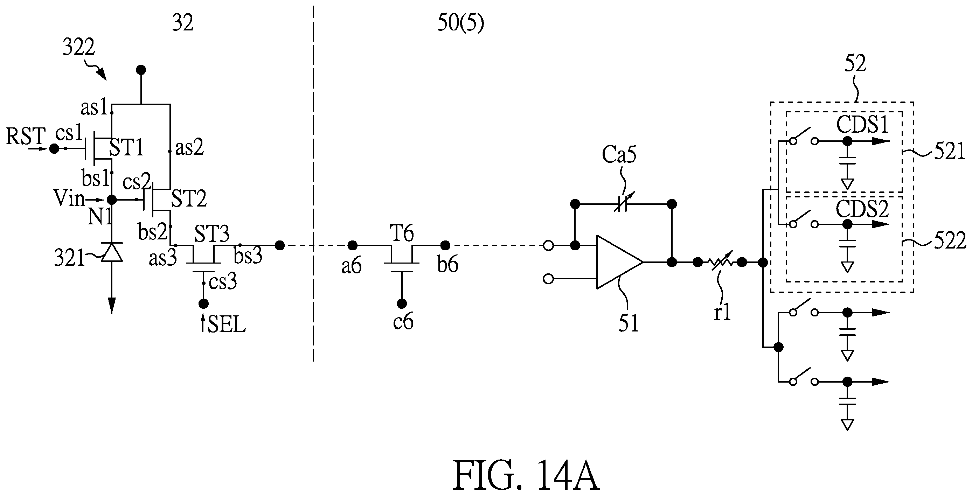

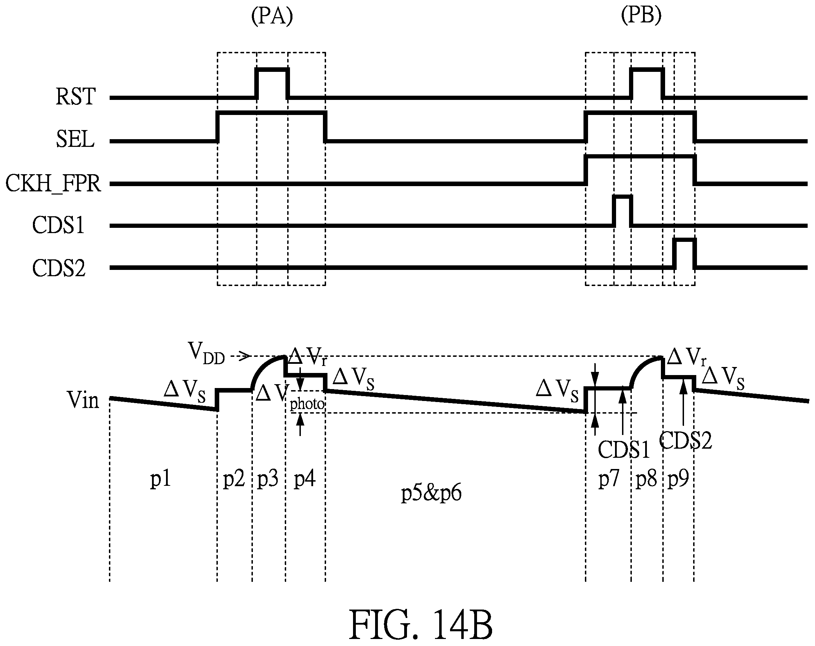

The fingerprint sensing of the present disclosure may eliminate noise in the sensing process through a mechanism such as correlated double sampling (CDS). FIG. 14A is a schematic diagram of the first sensing unit 32 and the CDS processing circuit 50 according to an embodiment of the disclosure. FIG. 14B is a schematic diagram of the operation of the sensing unit 32 and the CDS processing circuit 50 according to an embodiment of the disclosure, which is used to display the signal timing of each switching element in the first sensing unit 32 and the CDS processing circuit 50 during the CDS process, and display the waveform changes of the input voltage Vin during the CDS process, and please also refer to FIG. 1 to FIG. 13 at the same time

As shown in FIG. 14A, the first sensing unit 32 may be electrically connected to a CDS processing circuit 50. The internal structure of the sensing circuit 32 may be applicable to the description of FIG. 4, and thus a detailed description is deemed unnecessary. In one embodiment, the CDS processing circuit 50 may be disposed in the first driving unit 5, but it is not limited thereto. In one embodiment, the CDS processing circuit 50 may include a switch T6, an amplifier 51, a capacitor ca5, a resistor r1 and a storage unit 52, but it is not limited thereto. The switch T6 may be, for example but not limited to, a transistor, wherein a first end a6 of the switch T6 may be electrically connected to the sensing circuit 32, a second end b6 of the switch T6 may be electrically connected to an input end of the amplifier 51, and a control end c6 of the switch T6 may be electrically connected to a control signal CKH_FPR. The other input end of the amplifier 51 may be electrically connected to a reference signal (not shown). The capacitor ca5 may be connected across the input end of the amplifier 51 and the output end of the amplifier 51. One end of the resistor r1 may be electrically connected to the amplifier 51, and the other end of the resistor r1 may be electrically connected to the storage unit 52. In one embodiment, the amplifier 51, the capacitor ca5 and the resistor r1 may be used as an integrator, which may be used to convert the sensing signal, but it is not limited thereto. In one embodiment, the storage unit 52 may include at least a first storage device 521 and a second storage device 522 connected in parallel. The first storage device 521 and the second storage device 522 may each include a switch and a capacitor, while it is not limited thereto.

As shown in FIG. 14B, when the first sensing unit 32 performs fingerprint sensing, the sensing element 321 may receive an input signal Vin (which may be regarded as a sensed signal) at a sensing node N1. The input signal Vin may include noise generated by parasitic capacitance in the circuit, and the operation of the CDS processing circuit 50 may be used to eliminate the noise. It should be noted that, during the CDS process, the second switch ST2 is in a turn-on state, and the first switch ST1, the third switch ST3 and the switch T6 may be turned on or off along with the CDS process, in which the control end cs1 of the first switch ST1 may receive the reset signal RST, the control end cs3 of the third switch ST3 may receive the selection signal SEL, and the control end c6 of the switch T6 may receive the control signal CKH_FPR. The execution process of CDS is described as follows.

First, in the first phase p1 of CDS, the first switch ST1, the third switch ST3 and the switch T6 are turned off (for example, the reset signal RST, the selection signal SEL and the control signal CKH_FPR are low, but not limited thereto), At this moment, the input signal Vin is input to the first sensing unit 32 and, since the sensing element 321 may have leakage, the input signal Vin will gradually decrease to a preset low voltage. Then, in the second phase p2 of CDS, the first switch ST1 and the switch T6 are turned off, and the third switch ST3 is turned on (for example, the selection signal SEL changes to a high voltage, and the reset signal RST and the control signal CKH_FPR are low, but not limited thereto). At this moment, the input signal Vin may be boosted from a low voltage, and the level of boost may be expressed as ΔVs. Then, in the third phase p3 of CDS, the first switch ST1 and the third switch ST3 are turned on (for example, the reset signal RST changes to a high voltage, the selection signal SEL maintains a high voltage, and the control signal CKH_FPR is a low voltage, but not limited thereto), and the switch T6 is turned off. At this moment, the input signal Vin may be raised to the high voltage VDD. Then, in the fourth phase p4 of CDS, the first switch ST1 and the switch T6 are turned off, and the third switch ST3 is turned on (for example, the reset signal RST changes to low voltage, the selection signal SEL remains high, the control signal CKH_FPR is low, but not limited thereto) and, at this moment, because of being affected by the parasitic capacitance between the first switch ST1 and the sensing node N1, the input signal Vin will decrease, and the level of decrease at this phase may be expressed as ΔVr. Then, in the fifth phase p5 of CDS, the first switch ST1, the third switch ST3 are turned off and the switch T6 is turned off (for example, the selection signal SEL changes to a low voltage, the reset signal RST and the control signal CKH_FPR are low voltage, but not limited thereto) and, at this moment, there is no parasitic capacitance between the third switch ST3 and the sensing node N1, and the input signal Vin will drop again. The level of drop at this phase may be expressed as ΔVs. Then, in the sixth phase p6 of CDS, the input signal Vin will gradually decrease to the preset low voltage. Then, in the seventh phase p7 of CDS, the first switch ST1 is turned off, the third switch ST3 and the switch T6 are turned on (for example, the selection signal SEL and the control signal CKH_FPR change to a high voltage, and the reset signal RST is a low voltage, but not limited thereto) and, at this moment, because of being affected by the parasitic capacitance between the third switch ST3 and the sensing node N1, the input signal Vin will increase from the preset low voltage. The level of increase may be expressed as ΔVs, and the first storage device 521 may record the voltage (which may be expressed as CDS1) of the input signal Vin at this moment. Then, in the eighth phase p8 of CDS, the first switch ST1, the third switch ST3 and the switch T6 are turned on (for example, the reset signal RST changes to a high voltage, and the selection signal SEL and the control signal CKH_FPR maintain a high voltage, but not limited thereto) and, at this moment, the input voltage Vin is raised from the voltage CDS1 to the high voltage VDD. Then, in the ninth phase p9 of CDS, the first switch ST1 is turned off, the third switch ST3 and the switch T6 are turned on (for example, the reset signal RST changes to a low voltage, and the selection signal SEL and the control signal CKH_FPR maintain a high voltage, but not limited thereto) and, at this moment, the input voltage Vin drops from the high voltage VDD. The level of drop may be expressed as ΔVr, and the second storage device 522 may record the voltage of the input signal Vin (which may be expressed as CDS2) at this moment. After the CDS processing circuit 50 obtains the voltages CDS1 and CDS2, the values of the voltages CDS1 and CDS2 may be sent to the backend (such as other chips or circuits with computing functions in the first driving unit 5, but not limited thereto) for performing subtraction calculation (such as CDS2-CDS1), and the subtraction result (CDS2-CDS1) may be regarded as the noise-removed input signal Vin, or may be regarded as the noise-removed sensing signal, which may be expressed as ΔVphoto. In these phases, the second phase p2 to the fourth phase p4 may be regarded as a reset phase PA, and the seventh phase p7 to the ninth phase p9 may be regarded as a reading phase PB, but it is not limited thereto.

In one embodiment, the noise-removed sensing signal ΔVphoto may satisfy the following formula: ΔVphoto = CDS2 - CDS1 = (VDD -ΔVr) - (VDD - ΔVr - Δvphoto - ΔVs + ΔVs).

Accordingly, the process of CDS can be understood.

In one embodiment, the waveform change of the input voltage Vin in FIG. 14B during the CDS process may be measured through an oscilloscope or other suitable instruments, while it is not limited thereto.

Accordingly, different implementation aspects of the electronic device 1 of the present disclosure can be understood. It should be noted that this disclosure is not limited thereto.

In one embodiment, the present disclosure may at least determine whether a product in contention falls within the protection scope of the present disclosure based on the presence or absence of components, the component configuration, the mechanical observation and/or the operation mode of the product, while it is not limited thereto.

The details or features of various embodiments of the present disclosure may be mixed and matched as long as they do not violate the spirit of the invention or conflict with each other.

Accordingly, the electronic device 1 of the present disclosure may use thin film process technology to combine fingerprint sensing elements and self-luminous elements, thereby reducing manufacturing costs and product thickness.

The aforementioned specific embodiments should be construed as merely illustrative, and not limiting the rest of the present disclosure in any way.

## Claims

1. An electronic device (1), comprising:
a substrate (2);
a plurality of pixels (3) disposed on the substrate (2), each of the plurality of pixels (3) including:
a display unit (31) including a self-luminous element (311); and
a first sensing unit (32);
a second sensing unit (4) disposed on the substrate (2) and configured to overlap at least one of the plurality of pixels (3);
a first driving unit (5) disposed on the substrate (2); and
a second driving unit (6) disposed on the substrate (2),
wherein, in a first mode, the first driving unit (5) outputs a first signal to the display unit (31);
wherein, in a second mode, the first driving unit (5) outputs a second signal to the second sensing unit (4), receives a third signal from the second sensing unit (4), and outputs a fourth signal to the second driving unit (6) according to the third signal;
wherein, in a third mode, the second driving unit (6) outputs a fifth signal to the first sensing unit (32) according to the fourth signal, and the first sensing unit (32) returns a sixth signal to the first driving unit (5).

2. The electronic device (1) as claimed in claim 1, further comprising a signal line (81) electrically connected to the display unit (31), the first sensing unit (32) and the first driving unit (5).

3. The electronic device (1) as claimed in claim 2, wherein the signal line (81) is used to transmit the first signal in the first mode.

4. The electronic device (1) as claimed in claim 2, wherein the signal line (81) is used to transmit the sixth signal in the third mode.

5. The electronic device (1) as claimed in claim 1, wherein, when the first driving unit (5) receives the sixth signal, the first driving unit (5) is used to perform biometrics recognition.

6. The electronic device (1) as claimed in claim 1, further comprising a signal line (8), wherein the display unit (31) further includes a self-luminous circuit (312) connected between the signal line (8) and the self-luminous element (311).

7. The electronic device (1) as claimed in claim 1, wherein the first sensing unit (32) further includes a sensing element (321) and a sensing circuit (322).

8. The electronic device (1) as claimed in claim 7, wherein the sensing circuit (322) further includes:
a first switch (ST1) having a first end (as1) and a second end (bs1), wherein the first end (as1) of the first switch (ST1) is electrically connected to a first power source (VDD1);
a second switch (ST2) having a control end (cs2), a first end (as2) and a second end (bs2), wherein the first end (as2) of the second switch (ST2) is electrically connected to a second power source (VDD2), wherein the control end (cs2) of the second switch (ST2) is electrically connected to the second end (bs2) of the first switch (ST1); and
a third switch (ST3) having a first end (as3), wherein the first end (as3) of the third switch (ST3) is electrically connected to the second end (bs2) of the second switch (ST2).

9. The electronic device (1) as claimed in claim 8, wherein the sensing element (321) has a first end (321a), and the first end (321a) of the sensing element (321) and the second end (bs1) of the first switch (ST1) are electrically connected to the control end (cs2) of the second switch (ST2).

10. The electronic device (1) as claimed in claim 8, wherein the second end (bs3) of the third switch (ST3) is electrically connected to the signal line (81).

11. The electronic device (1) as claimed in claim 8, wherein the first switch (ST1) has a control end (cs1), and the control end (cs1) of the first switch (ST1) is electrically connected to the second driving unit (6).

12. The electronic device (1) as claimed in claim 1, further comprising a common voltage signal line (Lbias) electrically connected to the second sensing unit (4) and the first sensing unit (32).

13. The electronic device (1) as claimed in claim 6, further comprising a third driving unit (7) disposed on the substrate (2), wherein the self-luminous circuit (312) of the display unit (31) is electrically connected to the third driving unit (7) through a scan line (9).

14. The electronic device (1) as claimed in claim 13, further comprising an active area (A) and a non-active area (B) surrounding the active area (A), wherein the plurality of pixels (3) are located in the active area (A), the second sensing unit (4) is located in the active area (A), and the first driving unit (5), the second driving unit (6) and the third driving unit (7) are located in the non-active area (B).

15. The electronic device (1) as claimed in claim 14, further comprising a first bonding area (11a), a first circuit area (12) and a second circuit area (13) disposed on the substrate (2) and located in the non-active area (B), wherein a de-multiplexer (131) is disposed in the second circuit area (13), the first driving unit (5) is disposed in the first bonding area (11a), the first driving unit (5) is electrically connected to the de-multiplexer (131) in the second circuit area (13) through at least one conductive wire (L3) disposed in the first circuit area (12), and the de-multiplexer (131) is electrically connected to the plurality of pixels (3) in the active area (A).
